# FASCICULE DE BREVET EUROPEEN

(11) **EP 0 666 717 B1**
(45) Date de publication et mention de la délivrance du brevet: **05.06.1996**
(21) Numéro de dépôt: 93924675.7
(22) Date de dépôt: 04.11.1993
(51) Int. Cl.: A23L 3/3463, C13D 1/00

(54) **UTILISATION D'ANTIBIOTIQUES IONOPHORES POLYETHER POUR LA MAITRISE DE LA CROISSANCE BACTERIENNE DANS LA FABRICATION DU SUCRE**
VERWENDUNG VON IONOPHOREN POLYÄTHER-ANTIBIOTIKEN ZUR KONTROLLE DES BAKTERIELLEN WACHSTUMS BEI DER ZUCKERGEWINNUNG
UTILIZATION OF IONOPHORETIC ANTIBIOTICS OF THE POLYETHER TYPE FOR CONTROLLING THE BACTERIAL GROWTH IN THE PRODUCTION OF SUGAR

(30) Priorité: 06.11.1992 FR 9213389
(43) Date de publication de la demande: 16.08.1995
(73) Titulaire: UNION NATIONALE DES GROUPEMENTS DE DISTILLATEURS D'ALCOOL (U.N.G.D.A.), F-75003 Paris (FR)
(72) Inventeur: DE MINIAC, Michel, F-75015 Paris (FR)
(74) Mandataire: Warcoin, Jacques
(86) Numéro de dépôt international: FR9301089
(87) Numéro de publication internationale: WO9410862

(56) Documents cités:
- EP-A- 0 171 628
- EP-A- 0 328 870

## Description

La présente invention concerne l'utilisation d'antibiotiques ionophores de type polyéther pour la maîtrise de la croissance bactérienne au cours de la fabrication du sucre (saccharose). Elle peut être utilisée avec une grande diversité de matières premières, telles que le jus de betterave sucrière, le jus de canne à sucre, des céréales (par exemple blé ou maïs) hydrolysées, ou tout autre produit contenant des sucres ou de l'amidon, qui peut être utilisé pour la production de sucres simples.

L'une des étapes principales dans la fabrication du sucre est un procédé d'extraction dans lequel la matière première, telle que des betteraves à sucre ou la canne à sucre, est traitée pour l'extraction du sucre (sous forme d'une solution aqueuse dénommée ici "jus sucré") à partir de la matière végétale. Par exemple, dans le cas de betteraves à sucre, on utilise couramment un procédé de diffusion dans lequel les betteraves sont trempées dans de l'eau chaude. Cela est normalement effectué aux environs de 70°C, dans des conditions acides (pH environ 6) pendant une durée de 1 à 2 heures. Pendant ce temps, des bactéries tolérant la chaleur peuvent proliférer, en se nourrissant de sucre et en réduisant ainsi la quantité qui peut être finalement recueillie et commercialisée. Cela a un effet négatif sur la productivité de l'usine et représente un important problème pour l'industrie. Le sucre de canne est couramment soumis à un processus d'extraction comprenant un broyage, dans lequel on rencontre des problèmes semblables.

Les micro-organismes qui sont la cause du problème sont pour la plupart des bactéries Gram positives qui appartiennent au genre Lactobacillus. Les bactéries des genres Streptococcus, Bacillus, Clostridium, Leuconostoc et Pediococcus peuvent également être présents. Dans le passé, on a utilisé le formaldéhyde pour essayer de maîtriser la croissance bactérienne, mais cela entraîne de sérieuses préoccupations concernant la sécurité.

La présente invention concerne un procédé pour la fabrication du sucre, dans lequel on utilise un antibiotique polyéther ionophore, tel que la monensine, la narasine, la salinomycine, le lasalocide, la maduramycine ou la semduramycine, pour maîtriser ou supprimer, la croissance bactérienne au cours du processus. Ces composés ont une bonne activité contre les bactéries Gram positives et ne se dégradent pas aisément avec le temps ou à hautes températures. Cela les rend intéressants pour l'industrie sucrière, car :
1. ils restent actifs pendant plusieurs jours dans les conditions opératoires caractéristiques d'une sucrerie ; et
2. ils restent actifs aux températures élevées et aux pH acides qui sont utilisés dans l'étape d'extraction.

La population bactérienne dans le bain d'extraction est grandement réduite par l'addition d'une concentration bactériostatique ou bactéricide, par exemple de 0,5 à 3,0 ppm, de préférence de 0,5 à 1,5 ppm, d'un ionophore polyéther tel que la monensine. Cette inhibition réduit grandement la consommation bactérienne de sucre, ce qui conduit à une amélioration sensible de la productivité de l'usine. De façon inattendue, il n'y a pas de résidus polyéther détectables dans les cristaux de sucre blanc finals. Ce résultat est particulièrement important, car cela rend l'invention appropriée à la fabrication de cristaux de sucre blanc de qualité alimentaire.

### LES ETAPES PRINCIPALES DE LA FABRICATION DU SUCRE

Les quatre étapes principales effectuées dans une sucrerie type sont décrites ci-après.

### EXTRACTION

Le but de cette étape est d'extraire le sucre de la matière première. Elle donne un jus sucré ayant un pH d'environ 6, qui est très sensible à la contamination bactérienne. Les substances solubles dans l'eau, telles que des protéines, qui doivent être retirées du milieu, car elles peuvent gêner la cristallisation du sucre, sont également extraites au cours de cette étape.

### PURIFICATION

Son but est d'éliminer les substances organiques extraites avec le sucre. Elle consiste à ajouter un mélange de chaux et d'eau au jus sucré et à faire passer dans celui-ci un courant de dioxyde de carbone pour faire précipiter le calcium sous forme de carbonate de calcium. Après filtration, on obtient un jus clair qui contient peu de substances organiques autres que le saccharose.

### CONCENTRATION

Ce jus clair, qui est constitué d'environ 14% de sucre en poids, est chauffé et concentré en un sirop ayant une teneur en sucre comprise entre 60% et 70% en poids.

### CRISTALLISATION

Cette dernière étape donne du sucre blanc et un sousproduit, la mélasse. Elle consiste à concentrer davantage le sirop à 85°C sous vide, pour l'amener au-delà du point de saturation du saccharose (en un état dénommé "sursaturation"). On introduit ensuite une petite quantité de cristaux de sucre (environ 0,5 g) pour amorcer la cristallisation, qui s'étend rapidement au sein du liquide, le transformant en une masse de cristaux de sucre blanc baignant dans un sirop coloré par des impuretés. Les cristaux de sucre blanc sont séparés par centrifugation, rincés puis séchés.

Cette étape de cristallisation est répétée deux fois sur le sirop non cristallisé qui sort de la centrifugeuse. La seconde fois et la troisième, elle donne du sucre brun qui n'est pas commercialisé. Au lieu de cela, il est réinjecté au début de la phase de cristallisation, avec le sirop provenant de l'étape d'évaporation, pour donner une quantité supplémentaire de sucre blanc de valeur. Seul le sucre blanc est commercialisé.

Après la troisième répétition, le jus foncé, non cristallisé, est devenu la mélasse. Celle-ci contient environ 50 % de sucre et 30 % de matière étrangère qui empêche une nouvelle cristallisation.

### DESCRIPTION DETAILLEE DU PROCEDE DE FABRICATION DU SUCRE

Le processus est décrit pour une usine traitant 500 tonnes de betteraves sucrières par heure.

### 1. EXTRACTION

Conditions opératoires: température: 70°C; pH = 6; durée: 1-2 heures; processus: continu.

Le processus d'extraction utilise un transporteur immergé dans de l'eau. Il est alimenté à une extrémité avec des betteraves concassées, et à l'autre avec de l'eau chaude, à laquelle ont été ajoutés divers résidus riches en sucre, pour le recyclage. Les betteraves avancent en direction opposée à celle du courant d'eau, de sorte que leur teneur en sucre diminue et celle en eau augmente.

Un jus sucré contenant environ 14 % de sucre (plus des protéines solubles dans l'eau et d'autres impuretés) s'écoule de l'extrémité où les betteraves non traitées arrivent sur le transporteur, tandis que les betteraves traitées (pulpe) sont évacuées par l'autre extrémité. Les 500 tonnes de betteraves traitées par heure donnent environ 500 m³ de jus sucré et 500 tonnes de pulpe.

### 2. PURIFICATION

Conditions opératoires: température: 75°C; pH = 8,5; durée: 1 heure; processus: continu.

Le jus sucré provenant de l'étape d'extraction est envoyé dans une cuve, dans laquelle il est mélangé avec une suspension aqueuse de chaux (200 g de CaO par litre). On fait passer dans la cuve un courant de dioxyde de carbone, qui provoque la précipitation du carbonate de calcium, entraînant les molécules de grande taille, telles que des protéines, qui peuvent interférer avec la cristallisation.

Les 500 m³ de jus sucré traités par heure utilisent environ 30 m³ de la suspension aqueuse de chaux et donnent environ 500 m³ de jus sucré purifié.

### 3. CONCENTRATION

Conditions opératoires: température: s'abaissant de 130 à 85°C; pH = 8,5; processus: continu.

Le jus sucré purifié est concentré par ébullition. Les 500 m³ de jus sucré (14-16 % de sucre) traités par heure donnent 110 m³ de sirop concentré (60-70 % de sucre).

### 4. CRISTALLISATION

Les 110 m³ de sirop concentré sont envoyés à travers les diverses phases de l'étape de cristallisation, pendant lesquelles encore 106 m³ d'eau sont éliminés par évaporation. On aboutit enfin à 60 tonnes par heure de sucre blanc et 20 tonnes de mélasse ayant une teneur en sucre de 50 %.

### PROPRIETES PRINCIPALES DES ANTIBIOTIQUES POLYETHER IONOPHORES

On a effectué des essais avec plusieurs antibiotiques polyéther ionophores, tels que la monensine, le lasalocide et la salinomycine, en utilisant du jus sucré extrait de betteraves sucrières. Ces essais ont confirmé l'existence de concentrations bactériostatiques et bactéricides qui, pour ces molécules, peuvent être aussi faibles que 0,5 à 3,0 ppm. Aux concentrations bactériostatiques, la croissance de la population bactérienne est inhibée. Aux concentrations bactéricides, la population bactérienne diminue.

On a également effectué un essai de sensibilité, montrant que des antibiotiques polyéther ionophores sont actifs contre la plupart des bactéries rencontrées communément dans des sucreries. Par exemple, le tableau 1 montre la réduction de la numération bactérienne observée 6 heures après traitement par 3,0 ppm de monensine.

**Tableau 1**

| **Effet de la monensine sur la numération bactérienne de divers micro-organismes** | | | |
|---|---|---|---|
| | Numération bactérienne | | |
| | à t=0 | à t=6 h | Diminution (%) |
| *Lactobacillus plantarium* | 1,2×10⁸ | 4,1×10⁵ | -99,70 |
| *Lactobacillus fermentum* | 6,2×10⁸ | 4,4×10⁴ | -99,99 |
| *Lactobacillus vaccimostercus* | 2,8×10⁸ | 2,1×10⁵ | -99,90 |
| *Lactobacillus buchneri* | 5,5×10⁸ | 3,0×10³ | -99,99 |
| *Lactobacillus yamanashiensis* | 1,8×10⁵ | 4,6×10⁴ | -74,40 |
| *Lactobacillus coryniformis* | 3,7×10⁸ | 3,3×10⁶ | -99,10 |
| *Leuconostoc mesenteroides* | 8,0×10⁵ | 5,4×10³ | -99,30 |
| *Leuconostoc acidilactici* | 8,2×10⁸ | 3,7×10⁸ | -54,90 |
| *Bacillus subtilis* | 3,1×10⁵ | 5,5×10⁴ | -82,30 |
| *Bacillus brevis* | 3,3×10⁸ | 6,0×10³ | -99,99 |
| *Bacillus megaterium* | 1,3×10⁸ | 5,8×10⁷ | -55,40 |
| *Bacillus coagulans* | 1,1×10⁵ | 6,1×10⁴ | -44,60 |

En outre, on a constaté que les antibiotiques polyéther ionophores sont stables à des températures d'environ 70°C et à un pH d'environ 6, c'est-à-dire dans des conditions semblables à celles rencontrées dans les bains d'extraction. Ils sont donc actifs dans les conditions opératoires industrielles normales. Cependant, ils se dégradent en partie aux températures élevées rencontrées en aval de l'extraction, ce qui permet d'obtenir des cristaux de sucre blanc exempts de résidus de monensine.

### ANALYSE DES RESIDUS

Pour confirmer que les cristaux de sucre blanc étaient exempts de résidus de monensine, on a effectué des essais avec l'aide de l'Institut Français de Recherche sur le Sucre, une organisation de recherche prise en charge par l'industrie. Tous les dosages de la monensine ont été effectués par l'Institut Européen pour l'Environnement, un laboratoire indépendant bien connu, situé à Bordeaux, France, qui utilise la méthode de dosage (HPLC) approuvée officiellement.

### MONENSINE DANS LA PHASE DE PURIFICATION

On a d'abord préparé une solution mère de monensine en dissolvant des cristaux de monensine dans de l'alcool à 96 %, pour atteindre une concentration de 20 g de monensine par litre de solution. Une partie de cette solution a été diluée davantage avec de l'eau jusqu'à une concentration de 150 mg de monensine par litre. On a ensuite utilisé celle-ci pour l'addition au jus sucré provenant de l'extraction. On a effectué trois essais différents en utilisant diverses concentrations de monensine dans le jus sucré, à savoir 0,5, 1,0 et 1,5 ppm.

Le jus additionné de monensine a été ensuite soumis à une étape normale de purification. On a prélevé des échantillons de 500 ml de jus purifié, filtré, à partir du courant sortant, immédiatement après la filtration. On les a soumis au dosage en utilisant la méthode HPLC approuvée officiellement. Les résultats sont récapitulés dans le tableau ci-dessous. Ils montrent que presque 90 % de la monensine sont éliminés par l'étape de purification. Cela est compréhensible, étant donné l'affinité de la monensine pour les ions positifs: elle se combine avec l'ion calcium et est éliminée avec celui-ci.

| Teneur en monensine | | % de monensine éliminée par la purification |
|---|---|---|
| Avant purification | Après purification | |
| 0,5 | <0,1 | >80 |
| 1,0 | 0,13 | 87 |
| 1,5 | 0,17 | 89 |

### MONENSINE DANS LA PHASE DE CONCENTRATION

Par addition d'eau distillée, on a d'abord normalisé à 14,7 % de matière sèche du jus purifié provenant de l'étape de purification. Ce jus normalisé a été ensuite traité par 1,5 ppm de monensine, au moyen de la solution à 150 mg/l dans de l'alcool dilué, préparée dans l'étape d'extraction. Le jus contenant de la monensine a été d'abord chauffé à 120°C pendant 10 minutes. On a ensuite abaissé la température jusqu'à 100°C, jusqu'à ce que la concentration de matière sèche atteigne environ 61 %. On a dosé le sirop par HPLC, et on a obtenu une teneur en monensine de 2,2 ppm.

Cette teneur était inférieure à celle à laquelle on aurait pu s'attendre d'après la simple concentration du jus. En effet, de 1,5 ppm, cette concentration aurait dû élever la teneur en monensine à 6,2 ppm. Puisqu'on n'a trouvé que 2,2 ppm, cela signifie que la différence, à savoir 4 ppm, soit 64 % de la quantité initiale introduite au début de l'essai, a été détruite par la chaleur.

### MONENSINE DANS LA PHASE DE CRISTALLISATION

On a ajouté au sirop provenant de l'étape de concentration 1,5 ppm de monensine, en utilisant la solution diluée de monensine dans de l'alcool (150 mg/l) préparée dans l'étape d'extraction. Après cristallisation, rinçage et séchage du sucre blanc, on a soumis au dosage à la fois le sucre et la mélasse non cristallisée restante. Les résultats montrent:
- aucune quantité décelable de monensine dans le sucre blanc (sensibilité de l'essai: 0,5 ppm),
- 1,5 ppm dans la mélasse non cristallisée restante.

Cela montre que la monensine reste dans le liquide et que les cristaux de sucre blanc rincés sont exempts de monensine. Au lieu de cela, la monensine se retrouve dans la mélasse.

### AVANTAGES ECONOMIQUES

La numération bactérienne normale dans le bain d'extraction d'une sucrerie est d'environ 10⁵ à 10⁶ organismes par ml. Des préoccupations commencent à apparaître au-dessus de cette valeur, et la contamination devient notable lorsqu'elle atteint 10⁹/ml. Ces bactéries se nourrissent de sucre et réduisent la quantité qui est finalement recueillie.

Le diagramme ci-après montre ce qui se produit lorsqu'on introduit 1,5 ppm de monensine dans le jus d'extraction. La majeure partie de celle-ci est détruite au cours du processus. Le reste se retrouve dans la mélasse à une concentration de 2,6 ppm.

Cependant, ces calculs supposent une utilisation continue de la monensine dans la production du sucre. En pratique, la gestion de la contamination bactérienne n'exige que le jus provenant de l'extraction ne soit traité qu'une fois par semaine, pour abaisser la numération bactérienne dans la zone exempte de problème, jusqu'au prochain traitement. Dans ces conditions, la concentration moyenne de monensine dans la mélasse serait de 0,4 ppm.

Cela se compare favorablement aux 30 ppm de monensine qui sont couramment utilisés pour compléter les rations d'aliments pour bovins, et ne devrait pas interférer avec l'utilisation de la mélasse en tant qu'aliment pour animaux.

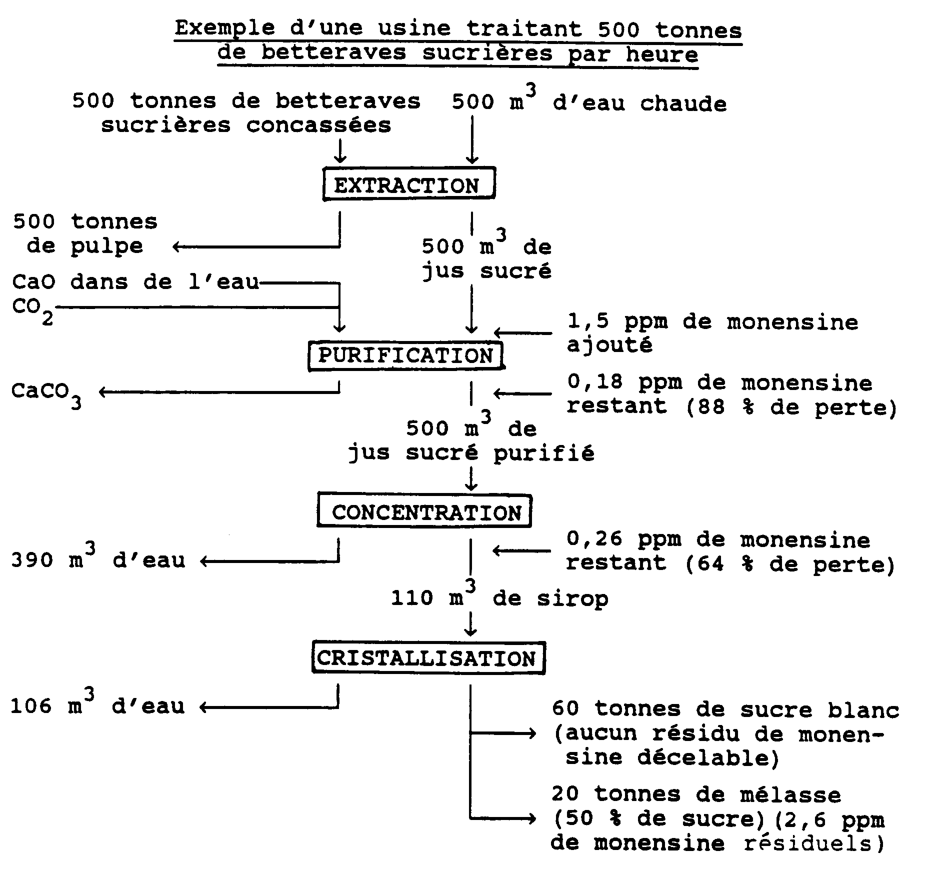

## Revendications

1. Procédé pour la fabrication du sucre, caractérisé en ce que l'on utilise un antibiotique polyéther ionophore pour maîtriser ou supprimer les bactéries Gram positives au cours du processus.

2. Procédé selon la revendication 1, dans lequel le polyéther ionophore est ajouté pendant la phase d'extraction.

3. Procédé selon la revendication 1 ou 2, dans lequel la quantité de polyéther ionophore qui est ajouté va de 0,5 à 3,0 ppm.

4. Procédé selon la revendication 3, dans lequel la quantité de polyéther ionophore va de 0,5 à 1,5 ppm.

5. Procédé selon l 'une quelconque des revendications précédentes, dans lequel le polyéther ionophore est la monensine, la narasine, la salinomycine, le lasalacide, la maduramycine ou la semduramycine.

6. Procédé selon l'une quelconque des revendications précédentes, dans lequel le polyéther ionophore est la monensine.

7. Utilisation d'un antibiotique polyéther ionophore pour maîtriser ou supprimer la prolifération indésirable de bactéries Gram positives dans la fabrication du sucre.

## Claims

1. A process for producing sugar characterized in that a polyether ionophore is utilized to control or suppress gram positive bacteria during the process.

2. A process according to claim 1, wherein the polyether ionophore is added during the extraction phase.

3. A process according to claim 1 or 2, wherein the amount of polyether ionophore added is from 0.5 to 3.0 ppm.

4. A process according to claim 3, wherein the amount of polyether ionophore is from 0.5 to 1.5 ppm.

5. Aprocess according to anyone of the preceding claims, wherein the polyether ionophore is monensin, narasin, salynomycin, lasalocid, maduramycin or semduramycin.

6. A process according to any one of the preceding claims, wherein the polyether ionophore is monensin.

7. The use of a polyether ionophore to control or suppress the undesirable proliferation of gram positive bacteria in sugar production.

## Patentansprüche

1. Verfahren zur Herstellung von Zucker, dadurch gekennzeichnet, daß man ein ionophores Polyether-Antibiotikum verwendet, um während des Ablaufs des Verfahrens die Gram-positiven Bakterien zu kontollieren oder zu unterdrücken.

2. Verfahren nach Anspruch 1, bei dem der ionophore Polyether während der Extraktionsphase zugegeben wird.

3. Verfahren nach Anspruch 1 oder 2, bei dem die zugegebene Menge des ionophoren Polyethers 0,5 bis 3,0 ppm beträgt.

4. Verfahren nach Anspruch 3, bei dem die zugegebene Menge des ionophoren Polyethers 0,5 bis 1,5 ppm beträgt.

5. Verfahren nach einem der vorhergehenden Ansprüche, bei dem der verwendete ionophore Polyether Monensin, Narasin, Salinomycin, Lasalacid, Maduramycin oder Semduramycin ist.

6. Verfahren nach einem der vorhergehenden Ansprüche, bei dem der verwendete ionophore Polyether Monensin ist.

7. Verwendung eines ionophoren Polyether-Antibiotikums zum Kontrollieren oder Unterdrücken der unerwünschten Vermehrung von Gram-positiven Bakterien bei der Herstellung von Zucker.
